# EUROPEAN PATENT SPECIFICATION

(11) **EP 2 162 490 B1**
(45) Date of publication and mention of the grant of the patent: **02.05.2012**
(21) Application number: 08762585.1
(22) Date of filing: 20.06.2008
(51) Int. Cl.: C08K 11/00, E01C 7/26, C08L 95/00

(54) **ASPHALT COMPOSITION USING RECYCLED WASTE AND METHOD OF MANUFACTURE**
ASPHALTZUSAMMENSETZUNG MIT REZYKLIERTEM ABFALL UND HERSTELLUNGSVERFAHREN
COMPOSITION D'ASPHALTE UTILISANT DES DÉCHETS RECYCLÉS ET SON PROCÉDÉ DE FABRICATION

(30) Priority: 22.06.2007 GB 0712089
(43) Date of publication of application: 17.03.2010
(73) Proprietor: Econpro Limited, West Midlands B46 1JU (GB)
(72) Inventor: SUTTON, Philip, West Midlands B46 1JU (GB); WESTON, Steven, West Midlands B46 1JU (GB)
(74) Representative: Prichard, Leslie Stephen
(86) International application number: PCT/GB2008/050477
(87) International publication number: WO 2009/001125

(56) References cited:
- EP-A- 0 669 425
- EP-A- 0 952 188
- WO-A-92/15645
- WO-A-93/12297
- US-A1- 2007 054 989
- DATABASE WPI Week 199723 Thomson Scientific, London, GB; AN 1997-256163 XP002506243 -& JP 09 088002 A (TORAY IND INC) 31 March 1997 (1997-03-31)
- DATABASE WPI Week 200702 Thomson Scientific, London, GB; AN 2007-012424 XP002506333 -& JP 2006 307109 A (KYOWA ASUKON KK) 9 November 2006 (2006-11-09)

## Description

### FIELD OF INVENTION

This invention relates to an asphalt composition and method of manufacturing the asphalt composition using recycled materials. In particular, the present invention relates to an asphalt composition which can be used in civil engineering ground work and/or surfacing applications.

### BACKGROUND

The term "asphalt" is a generic term that is used to describe a mixture of aggregate and bituminous binder that may also be known as asphalt concrete, coated macadam, hot-rolled asphalt, stone mastic asphalt (SMA), porous asphalt or mastic asphalt. When the aggregate material comprises glass, the asphalt may also be referred to as glassphalt.

Asphalt is a well known hard wearing material that is commonly used in ground work and/or surfacing applications. For example, asphalt material may be used to surface roads, pavements, driveways and/or roofs. Local Authorities and Utility Companies commonly use asphalt to construct and/or effect minor repairs to roads, pavements etc.

Certain asphalt materials may only be applied when heated to at least a predetermined temperature (hot-lay or hot-rolled asphalt). Other asphalt materials may be applied at ambient temperatures, i.e. without prior heating. For example, deferred setting asphalt materials are doped with doping oils (typically kerosene, creosote or similar) to retard setting until it is exposed to the atmosphere, and can therefore also be used at ambient temperatures.

The main problem with asphalt is that it exploits the Earth's finite resources. Conventional asphalt comprises a bitumen-based binder whereby the prime or virgin bitumen is obtained by the fractional distillation of crude oil. Conventional asphalt also comprises a prime mineral aggregate such as crushed stone or gravel. Another problem associated with asphalt is the rising and significant cost of virgin bitumen which makes a measurable impact on the manufacturing costs.

A simultaneous problem relates to the disposal of various waste materials and products that conventionally find their way to landfill. As far as the UK is concerned, recent estimates suggest that some geographical areas of the UK have only 4 or 5 years of landfill void-space remaining if the current rates of disposal continue. In order to try and overcome this problem the UK waste disposal industry is encouraging a reduction in waste produced, the recycling of materials and products and the use of alternative methods of disposal. Moreover, so as to discourage landfill disposal, the UK disposal industry has substantially increased the cost of disposing waste materials and products at landfill sites in recent years. An example of a waste material that is often consigned to landfill is bituminous waste - that is, waste material comprising bitumen or other materials having a similar chemical composition and/or similar properties. The bituminous waste may be generated during a manufacturing process and/or it may be generated by the disposal of products comprising bitumen or similar materials. For example, bituminous waste is generated during the manufacture and also disposal of bitumen-backed carpet or carpet tiles. Carbon black char, a material which has a similar long-chained hydrocarbon chemical composition and also similar viscous and binding properties to bitumen, may be generated by the pyrolysis of a carbonaceous waste material or any other appropriate energy from waste process. It has been found that bituminous waste has an unfavourable effect on the environment and it is undesirable for certain components of the bituminous waste to leach into the water table. Hence the disposal of bituminous waste in a landfill leads to significant costs both in terms of the environment and also financially to a person disposing of the waste.

The present invention seeks to address and/or overcome the above-mentioned problems associated with conventional asphalt materials and the disposal of bituminous waste. The present invention seeks to overcome these problems by utilising bituminous waste materials and recycled aggregate materials to manufacture an asphalt composition. The present invention seeks to provide an asphalt composition comprising bituminous waste material and recycled aggregate materials that is suitable for ground work and/or surfacing applications and complies with the relevant International and National standards (e.g. British Standard 594987:2007 and BS EN 13108-1:2006).

### BRIEF SUMMARY OF THE DISCLOSURE

According to a first aspect of the present invention there is provided an asphalt composition suitable for ground work and/or surfacing applications comprising:
a recycled aggregate material; and
a bituminous waste material.

The recycled aggregate material may include recycled glass. The recycled glass may comprise container or non-container waste glass. The recycled glass may comprise clear and/or coloured waste glass. The recycled glass is preferably processed into particulate form. The recycled glass may be processed into particulate form by breaking-up, grinding or crushing the recycled glass using any conventional means and method. The particles of recycled glass may include shards, fragments, pieces and/or chips of recycled glass. The particles of recycled glass may have a generally regular shape, e.g. a generally spherical or cuboid shape or they may have a generally irregular shape. The particles of recycled glass are preferably shaped and sized such that they are able to pass through a sieve having an aperture size of 25mm.

The recycled aggregate material may also or alternatively comprise recycled mineral aggregates such as recycled stone, asphalt, concrete, screed, gravel and/or any other suitable recycled mineral aggregate material. For example, the recycled aggregate material may comprise "planings" or "shavings" of stone, asphalt, concrete, screed and/or gravel removed from the road, pavement, driveway or roof that is about to be resurfaced by the asphalt composition. The recycled stone etc. is preferably processed into particulate form using any means and method known in the art. The recycled stone is preferably broken-up, ground or crushed into particulate form. The particles of recycled aggregate material may include pieces, chips and/or fragments of recycled aggregate material. In particulate form, the recycled aggregate may have a generally regular shape, e.g. a generally spherical shape or it may have a generally irregular shape. The particles of recycled aggregate material are preferably shaped and sized such that they are able to pass through at sieve having an aperture size of 25mm.

The recycled aggregate material may additionally or alternatively comprise GRP (glass reinforced plastic) waste fibre and/or polymeric-based automotive residue (ASR), for example polymeric-based end of life vehicle (ELV) waste. The GRP and ASR type wastes are preferably processed into particulate form using any means and method known in the art. The GRP and ASR type wastes may be shredded or crushed/ground/broken-up into particulate form. Depending on the process, the particles of GRP and ASR waste include shreds, pieces, chips, pellets or fragments. The shreds preferably have an elongate form and the fragments may have a generally regular or irregular shape. The shreds and/or pieces of GRP and ASR type wastes are preferably shaped and sized such that they are able to pass through a sieve having an aperture size of 25mm.

By using recycled aggregate material the problems associated with exploiting prime aggregate materials when manufacturing conventional asphalt are at least substantially reduced.

The recycled aggregate material typically comprises particles of many different dimensions. The recycled aggregate materials may be classified in accordance with the dimensions of the particles. The recycled aggregate materials are preferably classified by using sieves to determine the dimension ranges of the particles. For example, a recycled aggregate material may be classified as a coarse recycled aggregate material if at least a substantial portion of its particles are able to pass through at least one coarse sieve. A coarse recycled aggregate material may include at least a substantial portion of particles that are able to pass through at least one of the sieves having an aperture of between generally approximately 4mm and 25mm. A recycled aggregate material may be classified as a fine recycled aggregate material if at least a substantial portion of its particles are able to pass through at least one fine sieve. A fine recycled aggregate material may include at least a substantial portion of particles that are able to pass through at least one of the sieves having an aperture of between generally approximately 0.063mm and 3mm.

The recycled aggregate material may have a graded particle composition so as to help maximise the packing or interlocking of the recycled aggregate material within the asphalt composition. The composition of the recycled aggregate material is preferably graded by mixing recycled aggregate particles with at least two different ranges of dimensions. A graded recycled aggregate material preferably comprises a mixture of at least a first recycled aggregate material having a particulate form with a first range of dimensions and a second recycled aggregate material having a particulate form with a second, and different, range of dimensions. The first and second recycled aggregate materials may be the same or different types of recycled aggregate material. The grading of the recycled aggregate material is determined by the mixture ratio and dimension ranges of the recycled aggregate particles. The mixture ratio and dimension ranges of the particles are specifically controlled and selected to help enhance the packing or interlocking of the recycled aggregate material within the asphalt composition. For example, the recycled aggregate material may comprise a 70:30 mix of 10mm and down blend recycled waste container glass and 6mm and down blend recycled waste container glass. In another example, wherein the grading of the recycled aggregate material is expressed in percentages by weight of total aggregate, the recycled aggregate material comprises a mix of different coarse and fine recycled aggregate materials whereby 3 to 8% of the weight of the aggregate material is able to pass through a sieve with aperture size 0.063mm, 10 to 30% is able to pass through a 1.0mm sieve, 19 to 30% is able to pass through a 2.0mm sieve, 40 to 60% is able to pass through of a 4.0mm sieve, 55 to 75% is able to pass through a 6.3mm sieve, 95-100% is able to pass through a 10mm sieve and 100% is able to pass through a 14mm sieve. By maximising the packing or interlocking of the recycled aggregate material the need for a binder material to bind the materials of the asphalt composition is minimised or even eliminated.

The packing or interlocking of the recycled aggregate materials within the asphalt composition also has a bearing on the structural strength of the asphalt composition and thereby the deformation or creep of the asphalt composition under an applied load. It is therefore preferable that the recycled aggregate materials are closely packed within the asphalt composition such that the deformation or creep of the applied asphalt composition is restricted or minimised.

The bituminous waste material acts as a binder in the asphalt composition. The bituminous waste material may comprise bitumen-based waste, carbon black char waste and/or any other waste material having similar suitable viscous and binding properties to bitumen. The bitumen-based waste may be waste produced when manufacturing a bitumen-backed carpet or carpet tiles. The bitumen-based waste may further or alternatively comprise waste bitumen-backed carpet and/or waste bitumen-backed carpet tiles. The bitumen-based waste may further or alternatively be waste produced when manufacturing a bitumen-based roofing material and/or it may comprise waste bitumen-based roofing material. The carbon black char waste may be produced during the pyrolysis of carbonaceous waste materials or during other suitable energy from waste processes.

The quantity and content of the bituminous waste material is controlled so as to help maximise the binding of the bituminous waste material with the recycled aggregate material. By controlling the quantity and content of the bituminous waste material, the need for a further binding material is minimised or even eliminated.

By using the bituminous waste material the problems associated with exploiting virgin bitumen when manufacturing conventional asphalt and/or the problems associated with the disposal of bituminous waste are at least substantially reduced.

The bituminous waste material may be processed into a particulate form. This may be achieved by using any known method or means such as shredding the bituminous waste into shreds or crushing/grinding/breaking down the bituminous waste into pieces, chips and/or fragments. The shreds of bituminous waste material preferably have an elongate form. When the bituminous waste is broken down into pieces, chips and/or fragments, the fragments etc. may have a generally regular or irregular shape. The bituminous waste material is processed into particulate form such that the particles are sufficiently small enough to appropriately disperse and bind with the recycled aggregate material. The bituminous waste is also preferably processed into particulate form such that the particles are sufficiently large enough to minimise the processing costs and/or the particles are sufficiently large enough to substantially retain the fibre length and structure. The bituminous waste materials may be processed such that the particles are able to pass through a sieve having an aperture size of 25mm.

The deformation or creep of the asphalt composition is also dependent on the penetration (PEN) of the bituminous waste - that is, the penetration or deformation of the bituminous waste under an applied load. The asphalt composition thereby preferably comprises a bituminous waste material having a generally low PEN value. The bitumen derived from bitumen-backed carpet and/or bitumen-backed carpet tiles has a low PEN value of approximately 18.

It has been found that when bitumen-backed carpet and/or carpet tiles are used to make the asphalt composition, the fibres of the carpet help to improve or maximise the structural strength of the asphalt composition and thereby reduce the creep or deformation of the asphalt ground work and/or surface. By improving the structural strength of the asphalt composition the deformation or creep of the asphalt ground work and/or surface under an applied load is reduced or restricted.

The fibres of the carpet/carpet tiles preferably comprise a synthetic material such as polypropylene and/or nylon. The carpet fibres preferably comprise a synthetic material because the synthetic-based carpet fibres have an advantageously longer lifespan than the natural-based carpet fibres such as wool and/or cellulose. The fibres may comprise a mix of both synthetic and natural materials. However, the fibres preferably have a high content of synthetic material, approaching 100%. Even more preferably, the fibres contain only synthetic material. Since the synthetic-based carpet fibres have a lifespan of multiple decades, they are able to improve the structural strength, and thereby reduce the deformation or creep, of the asphalt composition for at least a substantial period of the lifetime of the asphalt ground work and/or surface.

The asphalt composition may be a hot-lay asphalt composition that can only be used in ground work and/or surfacing applications when heated to at least a predetermined temperature. The asphalt composition of the present invention may alternatively be a deferred setting asphalt composition that can be utilited in ground work and/or surfacing applications at ambient temperatures. The deferred setting asphalt composition preferably does not set until it is exposed to the atmosphere and/or UV light. The asphalt composition may comprise a dopant to defer the setting of the asphalt composition. The dopant may be kerosene, creosote or any other suitable known doping material to defer the setting of the asphalt composition. The asphalt composition may comprise up to 5% by weight of the composition. The amount of dopant added to the asphalt composition may be dependent on the weather conditions at the time of using the asphalt composition.

As mentioned previously, the asphalt composition of the present invention is suitable for use in civil engineering ground work and/or surfacing applications. The asphalt composition of the present invention complies with the relevant International and UK standards for such materials (e.g. British Standard 594987:2007 and British Standard EN 13108-1:2006). The asphalt composition may be used in the ground works and/or surfacing of roads, pavements, driveways and/or roofs etc. The asphalt composition may alternatively or additionally be used to maintain and effect minor repairs to roads, pavements, driveways and/or roofs etc.

The asphalt composition may further comprise a binder material to help bind the bituminous waste material and the recycled aggregate material. As described above, the need for a binder material is at least partially dependent on the packing of the recycled aggregate materials and/or the quantity and content of the bitumen, or other material having similar viscous and binding properties, obtained from the bituminous waste material. The binder material may be selected from a group consisting of: bitumen, plant derived resins and any other suitable binding material. Preferably, the asphalt composition comprises only very small amounts of binder material. For example, the composition preferably comprises between 0.1% and 6% weight of binder material and even more preferably up to 4% by weight of binder material. Ideally, the asphalt composition does not comprise any binder material.

The asphalt composition may further comprise at least one additive selected from: PICADA (TM), inert fillers, compatibilizers and other additives to aid manufacture. PICADA (TM) is a TiO₂ bas product that reputedly decomposes nitrogen oxides and/or various organic pollutants. For example, PICADA (TM) has been shown to remove VOC, and/or NOx from the local environment. More particularly, PICADA (TM) may be suitable for decomposing environmentally unfriendly gasses expelled by vehicles. Hence, PICADA (TM) may be used to help enhance the environmentally friendly characteristics of the asphalt composition. PICADA (TM) may be mixed within the asphalt composition, however it is preferably applied to the upper or outer surface of the asphalt material. Inert fillers include small particulates and they are preferably recycled or waste materials such as waste quarry fines. Compatibilizers may be provided to help further bind the materials of the asphalt composition. Additives to aid manufacture include process aids such as styrene butadiene copolymers.

Due to the use of recycled aggregate material and bituminous waste material the asphalt composition has a high recycled materials content. The overall content of recycled materials within the asphalt composition is at least partially dependent on the need for a binder material, which in turn is dependent on quantity and content of bitumen, or other material having similar properties, obtained from the bituminous waste and/or the packing of the recycled aggregate material. Preferably the asphalt composition has a very high recycled materials content approaching 100%. Ideally, the asphalt composition has an approximately 100% recycled materials content.

The asphalt composition may comprise:
between 50% and 99.9% by weight recycled aggregate material; and
between 0.1 % and 50% by weight bituminous waste material.

When an asphalt composition comprises a binder material, the asphalt composition may comprise:
between 49.9% and 99.8% by weight recycled aggregate material;
between 0.1% and 50% by weight bituminous waste material; and
between 0.1% and 4% by weight binder material.

It will be understood by a person skilled in the art that if the asphalt composition is doped with a dopant to defer the setting of the asphalt (up to 5% by weight of the composition) then the components of the examples of the asphalt composition discussed above will be adjusted accordingly.

According to a second aspect of the present invention there is provided a method of manufacturing an asphalt composition comprising the steps of:
(i) heating a recycled aggregate material;
(ii) mixing the pre-heated recycled aggregate material with a bituminous waste material to bind the said materials.

The method is suitable for manufacturing the asphalt composition of the first aspect of the invention.

The recycled aggregate material is pre-heated such that the heat from the recycled aggregate material melts the bituminous waste material and the materials thereby bind together during the mixing step. The recycled aggregate material is also heated to help disperse the aggregate material throughout the mixture and thereby minimise any coagulation of the aggregate material. The recycled aggregate material is preferably flame heated. The required temperature of the recycled aggregate material is dependent on the quantity, content and grading of the recycled aggregate material and/or the quantity, content and particle size of the bituminous waste material. When recycled glass and bitumen-backed carpet/ carpet tiles are used, the recycled glass is preferably heated to a temperature in the range of between 160 - 200°C, even more preferably to a temperature of approximately 180°C.

The bituminous waste material may also be heated prior to mixing the recycled aggregate material and the bituminous waste material. The bituminous waste material is preferably heated so as to further ensure the recycled aggregate material and bituminous waste material are sufficiently dispersed throughout the matrix and bind together. The bituminous waste material is preferably heated separately to the recycled aggregate material.

The method of manufacture may further include the step of processing the recycled aggregate material into the required particulate form having the desired shape, dimensions and/or the step of preparing a recycled aggregate material with an appropriately graded particle composition, prior to heating the recycled aggregate material.

The method of manufacture may further include the step of processing the bituminous waste material into the required particulate form having the desired shape and dimensions prior to mixing.

The recycled aggregate material and bituminous waste material are preferably mixed together using a mixing device. The mixing device preferably comprises a mixing chamber. The mixing device is preferably a conventional asphalt composition mixing device. When the recycled aggregate material and bituminous waste material are located within the mixing chamber, the mixing chamber preferably undergoes an agitating motion, gyrating motion or rotation motion to mix the materials. The mixing device is preferably suitable for mixing up to and including 5 tonnes of asphalt composition.

The mixing device may include heating means to heat the materials within the mixing chamber. The heating means may be provided to help maintain the temperature of the pre-heated recycled aggregate material and warm the bituminous waste material so as to further enhance the dispersal and binding of the matrix.

As the mixing chamber agitates, gyrates or rotates the materials within the mixing chamber may be subject to high shearing forces. The recycled aggregate material and/or bituminous waste material may be shredded and/or broken-up into particulate form by the shearing action. If already added to the mixing chamber in particulate form, the recycled aggregate material and/or bituminous material may be further shredded and/or broken down into smaller sized particles by the high shearing forces.

The shearing action of the mixing device may be used advantageously to process the recycled aggregate material and/or bituminous waste material into appropriately sized and shaped particles. This may be achieved by agitating, gyrating or rotating either the recycled aggregate material or bituminous waste material in the mixing chamber prior to adding and mixing the other material or materials. Alternatively, if the recycled aggregate material and/or bituminous waste material have already been processed into the appropriate particulate form, they may be added to the mixing chamber so as to minimise or avoid the effects of the shearing action. This may be achieved by simultaneously or sequentially adding the materials together in the mixing chamber and then mixing the said materials.

The method may further include the steps of adding and mixing a binder material and/or at least one additive as discussed above. The at least one binder and/or at least one additive may be added to the chamber prior to the mixing of any of the materials or at any stage during the mixing stage.

The method may further include the steps of adding and mixing a dopant with the recycled aggregate material and bituminous waste material. The dopants are typically susceptible to change, decomposition, deterioration or evaporation at a temperature substantially below that of the pre-heated recycled aggregate material, thus the steps of adding and mixing the dopant with the matrix preferably occur after the recycled aggregate material and bituminous waste material have been mixed and sufficiently cooled to a predetermined dopant-safe temperature. The dopant may be added before or after the asphalt material has been transported to the construction/ground working site.

The asphalt composition may be manufactured at the construction/surfacing site ready for use. Alternatively, the asphalt composition may be manufactured away from the site. The asphalt composition is preferably transported using conventional asphalt transportation means. If the asphalt composition is a deferred-setting asphalt, the asphalt composition may be cooled prior to being transported and/or it may be cooled on-route. The asphalt composition may cool to the ambient temperature. Alternatively, if the asphalt composition is a hot-lay asphalt, the asphalt composition is maintained in a heated state. The asphalt composition is preferably heated such that it is maintained at a suitable temperature of applying the asphalt composition to the required surface. The hot-lay asphalt composition is preferably maintained in a heated state using conventional hot-lay asphalt heating means.

It will be apparent to a skilled person in the art that variations of the present invention are possible and it is intended that the present invention may be used other than specifically described herein

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

### DETAILED DESCRIPTION

An embodiment of the present invention will now be described. As shown in Table 1, the present invention can be implemented using various recycled materials and other constituents. However, the invention should not be considered as being limited to the details thereof.

**TABLE 1**

| Ingredients | Quantity |
|---|---|
| Shredded bitumen-backed carpet tiles | 16.4% by weight |
| Bitumen binder | 1.6% by weight |
| 10mm and down fine container glass | 57.4% by weight |
| 6mm and down find container glass | 24.6% by weight |

The composition shown in Table 1 is an asphalt composition that is particularly suitable for pavement reinstatement. The asphalt composition may be a hot-lay asphalt composition. Alternatively, if a deferred-setting asphalt is required, the asphalt composition may be further doped with a dopant to defer the setting of the composition. The asphalt composition may be doped with kerosene of up to 5% by weight of the composition, with the other components of the asphalt composition being adjusted accordingly.

In the embodiment set out in Table 1 the recycled aggregate material, which forms the structural base of the composition, is a 70:30 mix of 10mm and down blend of container glass and 6mm and down blend of container glass. By grading the recycled aggregate material such that it has a mixture of recycled aggregate materials with two different ranges of dimensions, the recycled aggregate material is closely packed or interlocked within the asphalt composition. Due to the close packing of the recycled aggregate material the need for bitumen binder (that is, the quantity of bitumen binder required) is diminished. Moreover, the structural strength of the asphalt composition is enhanced and the deformation or creep of the asphalt composition is thereby reduced.

The composition also includes bituminous waste material, which in this example is shredded bitumen-backed carpet tiles. The carpet tiles are estimated to comprise approximately 20% bitumen, 60% filler and 20% polypropylene fibres. The bitumen-backed carpet tiles are shredded to a length of approximately 12mm and down. The bitumen derived from the carpet tiles acts as a binder to bind the recycled glass and so the need for a bitumen binder (that is, the quantity of bitumen binder required) is further reduced. The bitumen derived from the bitumen-backed carpet tiles has a penetration (PEN) value of approximately 18. Due to the low penetration value of the derived bitumen, the deformation or creep of the asphalt composition is further restricted. Advantageously, the polypropylene fibres of the carpet also help to improve the structural strength of the composition and thus reduce the deformation or creep of the finished product.

The composition set out in Table 1 also includes 1.6% by weight of a bitumen binder, which supplements the bitumen obtained from the carpet tiles. The binder may be selected from a group consisting of bitumen, plant derived resins and/or other suitable known binding materials.

The method of manufacturing the deferred setting asphalt composition according to the formulation in Table 1 will now be described. A graded recycled aggregate material comprising a 70:30 mix of 10mm and down blend of container glass and 6mm and down blend of container glass is prepared by crushing the waste container glass, sieving a quantity of the crushed glass using a sieve having an aperture of 10mm and a quantity of the crushed glass in a sieve having an aperture of 6mm and consequently mixing the sieved glass in the required ratios. The bitumen-backed carpet tiles are also shredded and preferably sieved to a size of approximately 12mm and down.

The graded recycled aggregate material is flame heated to a temperature of approximately 180°C.

So as to minimise or avoid the shearing effects, the pre-heated recycled aggregate material and bituminous waste material are placed together in the mixing chamber of a mixing device and then subsequently mixed by agitating, gyrating or rotating the mixing chamber. Due to the heating of the recycled aggregate material the recycled aggregate material is substantially dispersed throughout the matrix and the coagulation aggregate material within the matrix is minimised as the materials are mixed. Also, the heat from the recycled aggregated material is sufficient to melt the bitumen of the bituminous waste material such that the recycled aggregate material and bituminous waste material bind together as they are mixed.

The bitumen binder is also added during the mixing stage, and sufficiently melted by the heat from the pre-heated recycled aggregate material, to help further bind the matrix together.

If the asphalt composition is a hot-lay asphalt then it is transported after mixing to the construction/surfacing site in a heated state such that it can be applied at or above the requisite temperature. If a deferred-setting asphalt is required then a dopant to defer the setting of the composition is added after mixing the recycled aggregate material and bituminous waste material. So as to avoid any change, decomposition, deterioration or evaporation of the dopant, the dopant is added to the asphalt composition after it has cooled sufficiently to a predetermined dopant-safe temperature. The dopant may be added before or after the transportation of the asphalt composition to the requisite site. The deferred-setting asphalt composition may be further cooled before and/or during transportation to the ambient temperature prior to application.

## Claims

1. An asphalt composition suitable for ground work and/or surfacing applications comprising:
a recycled aggregate material; and
a bituminous waste material, **characterized in that** the bituminous waste material comprises bitumen-backed carpet, bitumen-backed carpet tiles and/or the waste produced when manufacturing bitumen-backed carpet or carpet tiles.

2. An asphalt composition as defined in claim 1, wherein the recycled aggregate material comprises at least one selected from amongst recycled glass, recycled mineral aggregates, GRP waste and/or ASR waste, and recycled aggregate material in a particulate form.

3. An asphalt composition as defined in any preceding claim, wherein the recycled aggregate material has a graded particulate form and comprises at least a first recycled aggregate material having a particulate form with a first range of dimensions and a second recycled aggregate material having a particulate form with a second, and different, range of dimensions.

4. The asphalt composition as defined in any preceding claim, wherein
the asphalt composition comprises:
between 50% and 99.9% by weight recycled aggregate material; and
between 0.1 % and 50% by weight bituminous waste material.

5. The asphalt composition as defined in any of claims 1 to 3, further comprising a binder material, wherein the asphalt composition comprises:
between 49.9% and 99.8% by weight recycled aggregate material;
between 0.1 % and 50% by weight bituminous waste material; and
between 0.1 % and 4% by weight binder material.

6. The asphalt composition as defined in any of claims 1 to 3 or 5 further comprising at least one additive, the additive being at least one selected from inert fillers, compatibilizers and other additives to aid manufacture.

7. An asphalt composition as defined in any preceding claim, wherein the asphalt composition is one selected from amongst a hot-lay asphalt, and a deferred-setting asphalt comprising a dopant to defer the setting of the asphalt.

8. A method of manufacturing an asphalt composition comprising the steps of:
heating a recycled aggregate material; and
mixing the pre-heated recycled aggregate material with a bituminous waste material so as to bind the said materials, said method **characterized in that** the bituminous waste material comprises bitumen-backed carpet, bitumen-backed carpet tiles and/or the waste produced when manufacturing bitumen-backed carpet or carpet tiles.

9. The method according to claim 8, further comprising the step of heating the bituminous waste material prior to mixing the recycled aggregate material and bituminous waste material.

10. The method according to claim 8 or 9, wherein the recycled aggregate material and bituminous waste material are mixed by agitating, gyrating or rotating the said materials within a mixing chamber of a mixing device.

11. The method according to any of claims 8 to 10, further comprising the step of mixing a binder material and/or at least one additive with the recycled aggregate material and bituminous waste.

12. The method according to any of claims 8 to 11, further comprising the step of mixing a dopant that defers the setting of the asphalt composition, with the recycled aggregate material and bituminous waste material.

## Patentansprüche

1. Asphaltzusammensetzung, die für Erdarbeiten und/oder Oberbauanwendungen geeignet ist, umfassend:
ein recyceltes Zuschlagstoffmaterial; und
ein Bitumenabfallmaterial, **dadurch gekennzeichnet, dass** das Bitumenabfallmaterial bitumenhinterlegten Teppich, bitumenhinterlegte Teppichfliesen und/oder den Abfall umfasst, welcher bei der Herstellung von bitumenhinterlegtem Teppich oder Teppichfliesen entsteht.

2. Asphaltzusammensetzung nach Anspruch 1, wobei das recycelte Zuschlagstoffmaterial zumindest eines umfasst, das ausgewählt ist aus recyceltem Glas, recyceltem Mineralzuschlagstoffen, GFK-Abfall und/oder ASR-Abfall und recyceltem Zuschlagstoffmaterial in einer Teilchenform.

3. Asphaltzusammensetzung nach irgendeinem vorhergehenden Anspruch, wobei das recycelte Zuschlagstoffmaterial eine gestufte Teilchenform hat und zumindest ein erstes recyceltes Zuschlagstoffmaterial mit einer Teilchenform mit einem ersten Bereich von Dimensionen und ein zweites recyceltes Zuschlagstoffmaterial mit einer Teilchenform mit einem zweiten und unterschiedlichen Bereich von Dimensionen umfasst.

4. Asphaltzusammensetzung nach irgendeinem vorhergehenden Anspruch, wobei die Asphaltzusammensetzung umfasst:
zwischen 50 und 99,9 Ges.-% recyceltes Zuschlagstoffmaterial; und
zwischen 0,1 und 50 Ges.-% Bitumenabfallmaterial.

5. Asphaltzusammensetzung nach irgendeinem der Ansprüche 1 bis 3, weiterhin umfassend ein Bindematerial, wobei die Asphaltzusammensetzung umfasst:
zwischen 49,9 und 99,8 Gew.-% recyceltes Zuschlagstoffmaterial;
zwischen 0,1 und 50 Gew.-% Bitumenabfallmaterial; und
zwischen 0,1 und 4 Gew.-% Bindematerial.

6. Asphaltzusammensetzung nach irgendeinem der Ansprüche 1 bis 3 oder 5, weiterhin umfassend zumindest ein Additiv, wobei das Additiv zumindest eines ist, das ausgewählt ist aus reaktionsträgen Füllstoffen, Verträglichkeitsvermittlern und anderen Additiven zur Unterstützung der Herstellung.

7. Asphaltzusammensetzung nach irgendeinem vorhergehenden Anspruch, wobei die Asphaltzusammensetzung eine ist, die ausgewählt ist aus Heißeinbauasphalt und einem verzögert abbindenden Asphalt mit einem Dotierungsmittel zum Verzögern des Abbindens des Asphalts.

8. Verfahren zur Herstellung einer Asphaltzusammensetzung, umfassend die folgenden Schritte:
Erhitzen eines recycelten Zuschlagstoffmaterials; und
Vermischen des vorerhitzten recycelten Zuschlagstoffmaterials mit einem Bitumenabfallmaterial, um die Materialien zu binden, wobei das Verfahren **dadurch gekennzeichnet ist, dass** das Bitumenabfallmaterial bitumenhinterlegten Teppich, bitumenhinterlegte Teppichfliesen und/oder den Abfall umfasst, welcher beim Herstellen von bitumenhinterlegtem Teppich oder Teppichfliesen entsteht.

9. Verfahren nach Anspruch 8, weiterhin umfassend den Schritt des Erhitzens des Bitumenabfallmaterials vor dem Vermischen des recycelten Zuschlagstoffmaterials und Bitumenabfallmaterials.

10. Verfahren nach Anspruch 8 oder 9, wobei das recycelte Zuschlagstoffmaterial und Bitumenabfallmaterial durch Rühren, Kreisenlassen oder Rotieren der Materialien in einer Mischkammer einer Mischvorrichtung vermischt werden.

11. Verfahren nach irgendeinem der Ansprüche 8 bis 10, weiterhin umfassend den Schritt des Vermischens eines Bindematerials und/oder zumindest eines Additivs mit dem recycelten Zuschlagstoffmaterial und Bitumenabfall.

12. Verfahren nach irgendeinem der Ansprüche 8 bis 11, umfassend den Schritt des Vermischens eines Dotierungsmittels, das das Abbinden der Asphaltzusammensetzung verzögert, mit dem recycelten Zuschlagstoffmaterial und Bitumenabfallmaterial.

## Revendications

1. Une composition d'asphalte appropriée pour des applications de travail du sol et/ou de revêtement routier se composant de ce qui suit:
un matériau d'agrégat recyclé ; et
un matériau de déchet bitumineux, **se caractérisant par le fait que** le matériau de déchet bitumineux comprend de la moquette à revers en bitume, des dalles de moquette à revers en bitume et/ou les déchets produits lors de la fabrication de moquette ou dalles de moquette à revers en bitume.

2. Une composition d'asphalte selon la définition de la revendication 1, dans laquelle le matériau d'agrégat recyclé se compose d'au moins un des éléments suivants : verre recyclé, agrégats minéraux recyclés, déchets de plastique renforcé de fibre de verre et/ou résidus de déchiquetage d'automobiles, et matériau d'agrégat recyclé sous une forme de particules.

3. Une composition d'asphalte selon la définition de n'importe laquelle des revendications précédentes, dans laquelle le matériau d'agrégat recyclé se présente sous la forme de particules calibrées et comporte au moins un premier matériau d'agrégat recyclé sous forme de particules avec une première plage de dimensions et un deuxième matériau d'agrégat recyclé sous forme de particules avec une deuxième plage de dimensions différente de la première.

4. La composition d'asphalte de n'importe laquelle des revendications précédentes, dans laquelle la composition se compose de :
entre 50 % et 99,9 % par poids de matériau d'agrégat recyclé ; et
entre 0,1 % et 50 % par poids de matériau de déchet bitumineux.

5. La composition d'asphalte définie à n'importe laquelle des revendications 1 à 3 comportant également un liant, la composition d'asphalte se composant de ce qui suint :
entre 49,9 % et 99,8 % par poids de matériau d'agrégat recyclé ;
entre 0,1 % et 50 % par poids de matériau de déchet bitumineux ; et
entre 0,1 % et 4 % par poids de liant.

6. La composition d'asphalte définie à n'importe laquelle des revendications 1 à 3 ou 5 comprenant également au moins un additif, l'additif étant au moins un additif sélectionné parmi les suivants : des charges inertes, des compatibiliseurs et autres additifs susceptibles de faciliter la fabrication.

7. Une composition d'asphalte selon n'importe laquelle des revendications précédentes, la composition d'asphalte étant sélectionnée parmi les suivantes : un asphalte posé à chaud et un asphalte à prise différée comportant un dopant pour différer la prise de l'asphalte.

8. Un procédé de fabrication d'une composition d'asphalte se composant des opérations suivantes :
chauffer un matériau d'agrégat recyclé; et
mélanger le matériau d'agrégat recyclé préchauffé avec un matériau de déchet bitumineux de façon à lier les matériaux, le procédé **se caractérisant par le fait que** le matériau de déchet bitumeux comprend de la moquette à revers en bitume, des dalles de moquette à revers en bitume et/ou les déchets produits lors de la fabrication de moquette ou dalles de moquette à revers en bitume.

9. Le procédé décrit à la revendication 8, consistant également à chauffer le matériau de déchet bitumeux avant de mélanger le matériau d'agrégat recyclé et le matériau de déchet bitumeux.

10. Le procédé de la revendication 8 ou 9, dans lequel le matériau d'agrégat recyclé et le matériau de déchet bitumeux sont mélangés par agitation, giration ou rotation dans la chambre de mélange d'une mélangeuse.

11. Le procédé de n'importe laquelle des revendications 8 à 10, supposant également de mélanger un liant et/ou au moins un additif avec le matériau d'agrégat recyclé et le matériau de déchet bitumeux.

12. Le procédé de n'importe laquelle des revendications 8 à 11, supposant également de mélanger un dopant propre à retarder la prise de la composition d'asphalte avec le matériau d'agrégat recyclé et le matériau de déchet bitumeux.
